# EUROPEAN PATENT SPECIFICATION

(11) **EP 0 774 605 B1**
(45) Date of publication and mention of the grant of the patent: **17.09.2003**
(21) Application number: 96308321.7
(22) Date of filing: 18.11.1996
(51) Int. Cl.: F16K 11/056, B01D 35/04

(54) **Multi-way valve and water purifier using the same**
Mehrwegventil und Wasserreinigungsgerät mit solchem Ventil
Distributeur à plusieurs voies et purificateur d'eau incorporant un tel distributeur

(30) Priority: 17.11.1995 JP 30024795; 19.12.1995 JP 34922095
(43) Date of publication of application: 21.05.1997
(73) Proprietor: TORAY INDUSTRIES, INC., Tokyo 103-8666 (JP)
(72) Inventor: Yonezawa, Yasuo, Nagoya-shi, Aichi, 457 (JP); Itakura, Jyunji, Gamou-gun, Shiga, 521-13 (JP); Isobe, Takashi, Otsu-shi, Shiga, 520 (JP); Tamatsu, Sho, Yamashina-ku, Kyoto-shi, Kyoto, 607 (JP)
(74) Representative: Coleiro, Raymond

(56) References cited:
- EP-A- 0 433 453
- DE-B- 1 016 083
- GB-A- 1 085 546
- GB-A- 2 257 052
- US-A- 3 802 563
- US-A- 3 858 608

## Description

The present invention relates to a multi-way valve, a water purifier using the same and a method for distributing or mixing a fluid, and more particularly to a multi-way valve for distributing or mixing a fluid and a water purifier and a fluid distributing or mixing method using this multi-way valve.

As conventional multi-way valves for distributing or mixing a fluid, a so-called rotary-type valve wherein fluid paths are switched by rotating a seal member (for example, U.S. Patents 4,172,796, 4,770,768 and 5,160,038) and a so-called sliding-type valve wherein fluid paths are switched by linearly moving a seal member have been broadly used. However, any of these multi-way valves has problems with durability and sealing property of a seal member. Therefore, in order to solve these problems, the following valves have been proposed.
(1) a multi-way valve wherein a plurality of spherical elements for closing fluid paths are provided in a valve casing having a single chamber, and any one spherical element is pressed and moved in a circumferential direction of the casing by rotating a rotatable shaft for opening a corresponding fluid path (for example, Japanese Utility Model Publication HEI-7-12770)
(2) a multi-way valve wherein a fluid inlet and a plurality of fluid outlets are provided to a valve casing as well as spherical elements are provided for closing the respective fluid outlets, and any spherical element is moved in a direction parallel to an axis of a rotatable member by rotating the rotatable member for opening a corresponding fluid outlet (for example, Japanese Utility Model Laid-Open HEI-4-132271)
(3) a multi-way valve wherein a fluid inlet and two fluid outlets are provided to a valve casing, balls closing the fluid outlets by a pressure of water supplied from the fluid inlet are provided, and any ball is displaced from a valve seat by the rotating operation of a shift arm for opening a corresponding fluid outlet (for example, Japanese Utility Model Laid-Open HEI-6-16778)

However, in a case where a multi-way valve described in the above (1) is employed, because the spherical element must be moved in a circumferential direction by rotating the rotatable shaft, the amount of movement of the spherical element inevitably becomes great, and there is a defect that the multi-way valve becomes large-sized. If the multi-way valve becomes large-sized, the amount of resident fluid in the valve increases and there is a problem of becoming poor in hygienic property originating from the great amount of the resident fluid. Further, because the spherical elements must be taken off by disassembling the valve casing when the spherical elements are checked or exchanged for checking or improving the sealing ability due to the spherical elements, the work for the taking-off or exchange of the spherical elements becomes remarkably troublesome. Furthermore, there is a further problem that the shape of the rotatable shaft and the inside shape of the valve casing are complicated and the multi-way valve becomes expensive.

In a case where a multi-way valve described in the above (2) is employed, because the spherical element must be moved in a direction parallel to the axis of the rotatable member by rotating the rotatable member, the amount of movement of the spherical element in the direction of the axis of the rotatable member becomes great, and there is a defect that the multi-way valve becomes large-sized. If the multi-way valve becomes large-sized, the amount of resident fluid in the valve increases and there is a problem of becoming poor in hygienic property originating from the great amount of the resident fluid. Further, because the spherical elements must be taken off by disassembling the valve casing when the spherical elements are checked or exchanged for checking or improving the sealing ability due to the spherical elements, the work for the taking-off or exchange of the spherical elements becomes considerably troublesome.

In a case where a multi-way valve described in the above (3) is employed, because the ball must be moved in a single chamber of the valve casing by rotating the shift arm, the size of the chamber inevitably becomes great, and there is a defect that the multi-way valve becomes large-sized. If the multi-way valve becomes large-sized, the amount of resident fluid in the valve increases and there is a problem of becoming poor in hygienic property originating from the great amount of the resident fluid. Further, because the balls must be taken off by disassembling the valve casing when the balls are checked or exchanged for checking or improving the sealing ability due to the balls, the work for the taking-off or exchange of the balls becomes remarkably troublesome. Furthermore, because the shape and the attachment condition of the shift arm must be set in proper conditions, the multi-way valve must be assembled with meticulous care and there is a fear causing a defective, and as a result, there occurs a problem that the multi-way valve becomes expensive.

Further, a multi-way valve having an inflow path and a plurality of outflow paths wherein the fluid paths are switched particularly by a pushing member is also known.

As this type of multi-way valve, as disclosed in Japanese Utility Model Publication SHO 63-8460 and Japanese Utility Model Laid-Open SHO 60-151972, there is a cylinder-piston type valve comprising a cylinder having a fluid inlet and fluid outlets and a piston sliding in the cylinder and having a seal member. Further, as disclosed as switching valves in JP-A-SHO 48-10631 and JP-A-SHO 52-45732, there is a ball-type valve closing a fluid outlet by a ball and opening the fluid outlet by moving the ball.

However, in the former cylinder-piston type multi-way valve, because the seal member fixed to the piston is slid on the fluid inlet or the fluid outlet of the cylinder while being pressed, there is a problem that an abrasion quickly progresses and the seal member must be exchanged in a short period of time.

On the other hand, in the latter ball-type multi-way valve, because the fluid paths are switched by rolling the ball provided as a seal member, the problem with abrasion such as one in the former valve can be improved. However, because an operating lever connected to an operating member provided for moving the ball extends through a valve box and both end portions thereof protrude outside of the valve box, a motion of grasping one end of the lever to pull the lever or pushing the other end of the lever is required for the switching operation, and such an operation is inconvenient and cannot be easily performed.

In order to improve such a problem, a valve enabling to operate only at one end of an operating lever is proposed, for example, as a ball-type water passage switching device for a faucet described in Japanese Utility Model Publication SHO 51-26357. In this switching device for a faucet, however, because a certain length is required for a rotatable shaft of an operating lever extending through a wall of a switching chamber in a direction perpendicular to the wall and a seal member must be provided for sealing the rotatable shaft, the valve body tends to become large-sized in the axial direction of the shaft and such a valve is not preferred as a valve for a faucet of an ordinary home. Further, because most of faucets for an ordinary home are formed as a type in which a discharge pipe can be rotated in right-hand and left-hand directions (clockwise and counterclockwise directions), the method for operating an operating lever by moving the lever in right-hand and left-hand direction has a problem that the operation is not easy because the discharge pipe is rotated together with the operating lever.

Further, JP-B-HEI-5-31036 discloses a ball-type check valve for water in which an operating lever is moved in frontward and rearward directions relative to a discharge pipe. In this check valve, however, because pushing rods for moving balls, springs and seal members are required by the same number as that of fluid outlets, the number of parts increases and the structure of the valve becomes complicated.

EP-A-433453 discloses a multi-way valve comprising a valve casing, having an inlet and a plurality of outlets, and a plurality of spherical valve elements.

It would be desirable to provide a multi-way valve which can be formed small-sized as a whole, can decrease the amount of resident fluid therein and can facilitate the work for taking off and exchanging valve bodies, and a water purifier and a method for distributing or mixing a fluid using the multi-way valve.

Further, it would be desirable to provide a multi-way valve which can switch fluid paths easily and appropriately and whose mechanism for valve switching operation can be simplified, and a water purifier for using the multi-way valve.

Accordingly, in a first aspect the present invention provides a multi-way valve comprising
a valve casing (18) having a valve inlet (15) for entry of fluid into the valve and a plurality of valve outlets (16, 17, 17a) for supply of fluid from the valve;
a first chamber (18e) and a second chamber (18f) each within the valve casing, the first chamber (18e) communicating with the valve inlet (15) and the second chamber (18f) communicating with the valve outlets (16, 17, 17a), respectively;
a partition (18d) disposed between the first and second chambers (18e, 18f) and separating the first and second chambers from one another, the partition (18d) having a plurality of apertures (18a, 18b, 18c) therein allowing communication between the first and second chambers (18e, 18f) and providing respective fluid inlets to respective fluid paths, within the second chamber (18f), communicating one with each respective valve outlet (16, 17, 17a) of the said plurality thereof;
a plurality of valve elements (18a₁, 18b₁, 18c₁) each associated with a corresponding said aperture (18a, 18b, 18c) and movable between a first position in which the corresponding said aperture is closed thereby and a second position in which the corresponding said aperture is in an open condition;
valve operating means comprising a plurality of cams (23a, 23b, 23c) each associated with a corresponding said valve element (18a₁, 18b₁, 18c₁) and cooperable with the said valve element (18a₁, 18b₁, 18c₁) so as to allow selective movement of each valve element (18a₁, 18b₁, 18c₁) between the said first and second positions;
the said plurality of valve elements (18a₁, 18b₁, 18c₁) being disposed generally in one of the first and second chambers (18e, 18f) and the said valve operating means being disposed generally in the other of the first and second chambers (18e, 18f) so that the said partition (18d) is disposed generally between the said plurality of valve elements (18a₁,18b₁, 18c₁) and valve operating means;
each said aperture (18a, 18b, 18c) in the partition (18d) allowing the said cooperation between the valve element (18a₁, 18b₁, 18c₁) corresponding with the aperture (18a, 18b or 18c) and the cam (23a, 23b or 23c) corresponding with the valve element so as selectively to open or close each said aperture and therefore select which said fluid path is to be open and which is to be closed.

The present multi-way valve comprises a valve casing having:
(1) one of (a) a valve inlet for entry of fluid into the valve and a plurality of valve outlets for supply of fluid from the valve to different respective locations; and
   (b) a plurality of valve inlets for receipt of fluid from different respective sources and a valve outlet for supply of a mixture of the fluids from the respective sources;
(2) a first chamber communicating with the or each valve inlet;
(3) a second chamber communicating with the or each valve outlet;
(4) a partition having a plurality of apertures therein;
(5) means defining one of:
   (a) separate respective fluid paths within the second chamber leading respectively from each said aperture to a corresponding said outlet of the plurality thereof; and
   (b) separate respective fluid paths within the first chamber leading respectively from each said fluid inlet of a plurality thereof to a corresponding said aperture;
(6) a plurality of valve elements disposed generally within one of the first and second chambers and co-operable one with each respective said aperture so as to be capable of closing the respective aperture; and
(7) valve operating means operable within the other of the said first and second chambers to push any one or more said valve element(s) away from the or each respective aperture and thereby selectively open one or more of the said fluid paths. In this valve, especially where the valve elements are in the second chamber, they may be biased towards their closure or opening position by biasing means such as a spring. However, when the valve elements are in the first chamber, they are preferably biased towards their closure position merely by their weight and fluid pressure.

A first multi-way valve according to the invention is a valve casing having a fluid inlet and a plurality of fluid outlets; a first chamber and a second chamber defined in said valve casing, the first chamber communicating with the fluid inlet, the second chamber communicating with the plurality of fluid outlets, respectively; a partition disposed between the first and second chambers and separating the first and second chambers, the partition having a plurality of fluid paths provided in correspondence with the plurality of fluid outlets and capable of communicating the first and second chambers to each other; a plurality of valve elements each engaging a corresponding fluid path of the plurality of fluid paths from a side of the first chamber and opening and closing the corresponding fluid path; and a driving device having cams which selectively drive the plurality of valve elements from a side of the second chamber (hereinafter, referred to as a first multi-way valve).

In this first multi-way valve, the valve elements are preferably formed as spherical elements. Further, it is preferred that each of the valve elements formed as spherical elements comprises a core composed of a rigid material and an elastic material provided on the surface of the core. The driving device preferable comprises a rotatable body on which the cams are arranged along an axial direction of the rotatable body. Further, for example, this first multi-way valve can be formed as a structure wherein communicating paths are formed between the plurality of fluid paths and the plurality of fluid outlets, respectively, and the respective communicating paths are separated from each other by the driving device.

A further aspect of the present invention comprises a water purifier having a multi-way valve for switching raw water flown in to at least one of a plurality of outflow destinations and means for filtering the raw water flown in through the multi-way valve.

The multi-way valve may be any of those of the invention described above.

The multi-way valve may comprise a valve casing having a fluid inlet and a plurality of fluid outlets; a first chamber and a second chamber defined in the valve casing, the first chamber communicating with the fluid inlet, the second chamber communicating with the plurality of fluid outlets, respectively; a partition disposed between the first and second chambers and separating the first and second chambers, the partition having a plurality of fluid paths provided in correspondence with the plurality of fluid outlets and capable of communicating the first and second chambers to each other; a plurality of valve elements each engaging a corresponding fluid path of the plurality of fluid paths from a side of the first chamber and opening and closing the corresponding fluid path; and a driving device having cams which selectively drive the plurality of valve elements from a side of the second chamber. Hereinafter, this water purifier is referred to as a first water purifier.

In this first water purifier, preferred aspects of its multi-way valve are the same as those of the aforementioned first multi-way valve.

The above-described water purifiers can be applied to a water purifier formed so that both the multi-way valve and the filtering means thereof are attached to a faucet. Alternatively, they can be applied to a water purifier wherein only the filtering means thereof or both the multi-way valve and the filtering means thereof are placed on a base. Namely, they can be formed as any type of water purifier of a so-called cartridge-type water purifier directly attached to a faucet and a so-called top sink-type water purifier.

Further, a method for distributing or mixing a fluid may particularly employ the first multi-way valve. Such a method may comprise distributing a fluid introduced from a single fluid inlet to at least one of a plurality of fluid outlets, or mixing fluids introduced from a plurality of fluid inlets by supplying the fluids to a single fluid outlet, and the distributing or mixing method comprises the steps of interposing fluid paths corresponding to the plurality of fluid outlets or the plurality of fluid inlets between a first chamber communicating with the single fluid inlet or the plurality of fluid inlets and a second chamber communicating with the plurality of fluid outlets or the single fluid outlet; closing the fluid paths by valve elements provided in the first chamber utilizing self-weights of the valve elements and a fluid supply pressure; and driving at least one of the valve elements selectively from a side of the second chamber for opening at least one of the fluid paths by pushing up a corresponding valve element in accordance with a predetermined fluid distributing or mixing condition.

In the first multi-way valve, the fluid paths communicating the first and second chambers are surely closed by the valve elements utilizing the self-weights of the respective valve elements and a pressure of the supplied fluid and a good sealing ability can be indicated. A part of the valve elements are or is selectively moved toward the first chamber by driving the driving device, a corresponding fluid path is opened, and the fluid is supplied to the second chamber through the opened fluid path. A desired fluid distribution or mixing can be achieved by this opening operation of the selected fluid path. When the fluid path is opened, because the selected valve element may be slightly moved toward the first chamber side by the operation from the second chamber side, the amount of the movement of the valve element decreases as compared with conventional multi-way valves. As a result, the multi-way valve can be formed small-sized as a whole and the amount of resident fluid in the valve can be reduced.

Further, when required to take off or exchange the valve elements, because only the first chamber may be opened, the work required can be greatly facilitated as compare with the work in a conventional multi-way valve in which the whole of the multi-way valve must be disassembled.

Furthermore, when the valve element is formed as a spherical element and it is constructed from a core of a rigid material and an elastic material layer covering the surface of the core, an impact caused when the valve element closes a corresponding fluid path can be greatly decreased and abrasion of the corresponding portions can be suppressed, as well as a good sealing ability can be achieved by the elastic material layer.

In the water purifier using this first multi-way valve, either the condition purifying the raw water or the condition flowing the raw water out as it is can be easily selected, and the whole of the water purifier easily can be formed small-sized.

Further, in the method distributing or mixing a fluid using the first multi-way valve, the fluid paths can be surely closed by the self-weights of the valve elements and a fluid supply pressure, and a good sealing ability can be indicated. When a selected fluid path is opened, the corresponding valve element closing the fluid path may be merely slightly moved by pushing up the valve element from the second chamber side. Therefore, a desired fluid distribution or mixing can be easily and surely performed by a simple and a small amount of operation.

Preferred exemplary embodiments of the invention will now be described with reference to the accompanying drawings, in which:
FIG. 1 is a vertical sectional view of a water purifier using a multi-way valve according to a first embodiment of the present invention;
FIG. 2 is a right-hand side view of the water purifier shown in FIG. 1.
FIG. 3 is an enlarged vertical sectional view of the water purifier shown in FIG. 1, as viewed along III-III line of FIG. 1.
FIG. 4 is an exploded perspective view of a part of the multi-way valve shown in FIG. 1.
FIG. 5 is an enlarged sectional view of a valve element of the multi-way valve shown in FIG. 1.
FIG. 6 is a perspective view of a part of the water purifier shown in FIG. 1, showing a bayonet mechanism employed for the main body side of the water purifier.
FIG. 7 is a perspective view of a part of the water purifier shown in FIG. 1, showing a bayonet mechanism employed for the filter device side of the water purifier.
FIG. 23 is a perspective view of a top sink-type water purifier according to a second embodiment of the present invention.
FIG. 24 is an enlarged vertical sectional view of a filter device of the water purifier shown in FIG. 23.
FIG. 25 is an elevational view of a joint of the water purifier shown in FIG. 23.
FIG. 26 is an exploded perspective view of a part of the water purifier shown in FIG. 23.
FIG. 27 is an elevational view of an inlet of a multi-way valve incorporated into the water purifier shown in FIG. 23.
FIG. 28 is a vertical sectional view of a bayonet mechanism employed in the water purifier shown in FIG. 23.
FIG. 29 is a sectional view of the bayonet mechanism shown in FIG. 28 for explaining an operation condition of the bayonet mechanism.
FIG. 30 is a sectional view of the bayonet mechanism shown in FIG. 28 for explaining another operation condition of the bayonet mechanism.

Hereinafter, the preferred embodiments of the present invention will be explained with reference to the drawings.

Although the embodiments described hereinafter will be explained with respect to water purifiers incorporating multi-way valves according to the preferred embodiments of the present invention, of course, the multi-way valves can be applied to devices and apparatuses other than water purifiers and uses of the multi-way valves are not limited to the water purifiers.

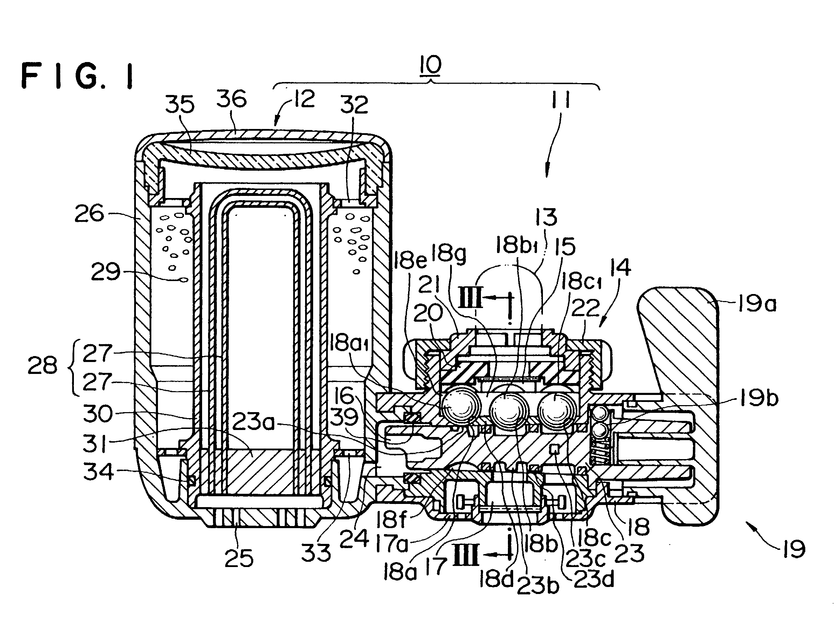

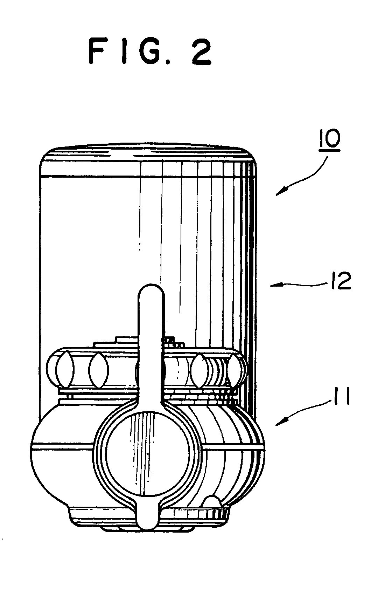

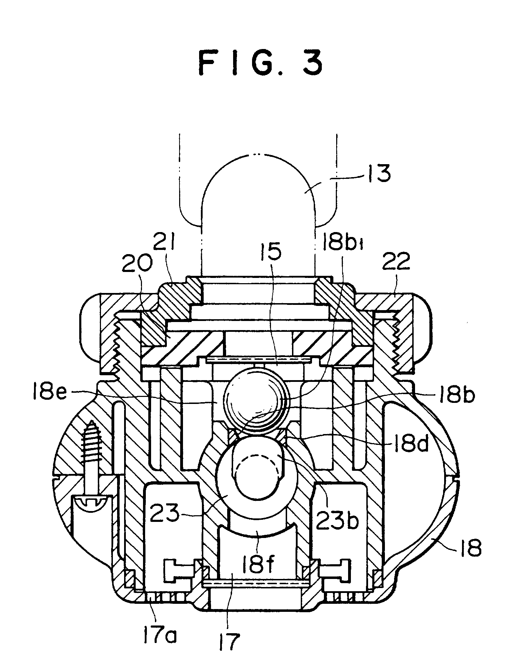

FIGS. 1 to 7 show a water purifier using a multi-way valve according to a first embodiment of the present invention. FIG. 1 is a vertical sectional view of the water purifier, FIG. 2 is a right-hand side view of the water purifier and FIG. 3 is a vertical sectional view of the water purifier shown in FIG. 1 as viewed along III-III line of FIG. 1.

A water purifier 10 of this embodiment comprises a water purifier body (valve body) 11 comprising a multi-way valve which switches untreated tap water flowing in from a faucet 13 to one of a plurality of outflow destinations, and an exchangeable cartridge-type filter device 12 (hereinafter, also referred to as "a filter containing cartridge" or merely "cartridge") provided as means for filtering the untreated tap water flowing in through the multi-way valve. The water purifier 10 is attached directly to the faucet 13 by a fastener 14 provided in the water purifier body 11.

The water purifier body 11 has a body 18, and the body 18 has an inlet 15 which is a fluid inlet for the tap water flowing in from the faucet 13 at an upper position of the body, a transfer port 16 for supplying the tap water to the filter containing cartridge 12 laterally of the body, and a supply port 17 for allowing the untreated tap water to flow out as it is and a shower supply port 17a for supplying the untreated tap water as a shower of water at a lower position of the body. A switching valve 19 for switching the flow path of the tap water to a selected direction is provided in the body 18. A fastener 14 for connecting the body 18 to the faucet 13 is provided on an upper portion of the body 18. As shown in FIG. 1, the fastener 14 comprises a ring-like rubber packing 20, a presser ring 21 and a cap 22, and the fastener 14 has a structure such that it can connect the body 18 to the faucet 13 by cooperation of a female screw thread at the internal periphery of the cap 22 with a male screw thread at the external periphery of the body 18 in a manner such that water leakage does not occur.

The body 18 has an interior divided by a partition 18d so as to provide respective chambers separate from one another, namely an upper chamber 18e formed as a first chamber and a lower chamber 18f formed as a second chamber. Three apertures 18a, 18b and 18c are provided in the partition 18d to allow fluid passage through partition 18d. The respective apertures 18a, 18b and 18c are spaced apart from one another along a longitudinal path extending parallel to a spool shaft 23 of a switching valve 19 connected to spool shaft 23. The inlet 15 is provided in and allows communication with the upper chamber 18e for passage of untreated tap water into the body 18. On the other hand, the transfer port 16, supply port 17 and the shower supply port 17a are three outlets for untreated tap water provided in and allowing communication from the lower chamber 18f for passage of untreated tap water out of the body 18. The apertures 18a, 18b and 18c allow communication between the upper and lower chambers 18e, 18f to provide a continuous flow path. Three spherical valve elements 18a₁, 18b₁ and 18c₁ are provided in the upper chamber 18e such that the respective valve elements can engage the respective corresponding apertures 18a, 18b and 18c under liquid hermetic sealing conditions and lower end portions of the respective valve elements can project into the interior of the lower chamber 18f so as to engage with the respective apertures. Therefore, when the valve elements 18a₁, 18b₁ and 18c₁ are taken off for checking or exchanged, the work therefor can be performed very easily by removing the fastener 14 from the body 18 and opening the upper chamber 18e from the upper side.

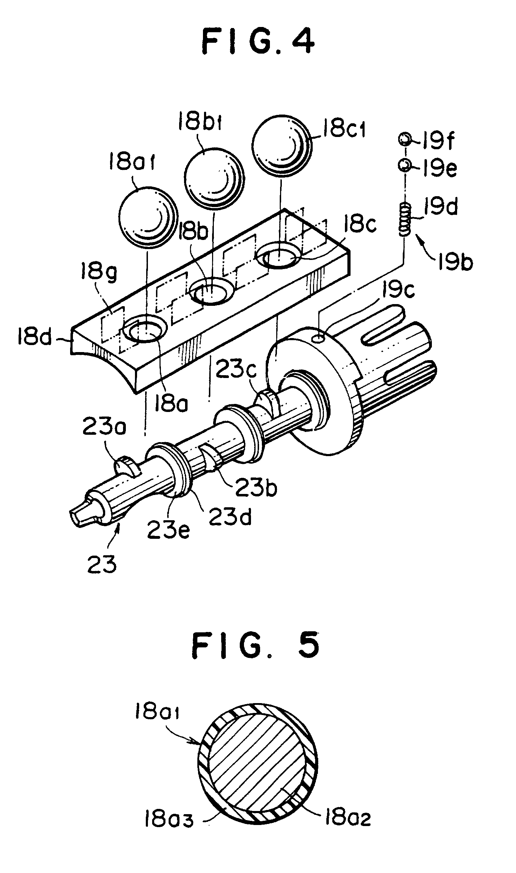

In the switching valve 19, as shown also in FIG. 4, annular rings 23e are disposed circumferentially around the spool shaft 23 and seal rings 23d are provided on the respective rings 23e. By engaging the seal rings 23d with the internal periphery of the lower chamber 18f under liquid hermetic sealing conditions, respective water flow paths are defined which communicate the apertures 18a, 18b and 18c with the transfer port 16, the supply port 17 and the shower supply port 17a, respectively, and the respective water flow paths are also separated from each other. Cams 23a, 23b and 23c are provided at predetermined positions on the spool shaft 23 (positions predetermined in correspondence with the respective apertures) for pushing up corresponding valve elements. Each of these cams 23a, 23b and 23c can selectively push a corresponding valve element upwardly by rotating the spool shaft 23at an angle of, for example, 90 degrees. In this manner, the extent to which a valve element is to be raised may be set to be in a range of 1 to 2 mm for ensuring passage of a sufficient amount of water through a given aperture. Therefore, the body 18 having the upper chamber 18e and the lower chamber 18f can have a small size and ultimately, the amount of resident water can be decreased to realize improved hygiene conditions.

A selected valve element among the valve elements 18a₁, 18b₁ and 18c₁ is pushed up by rotating the spool shaft 23 at a predetermined angle by the operation of a switching lever 19a to open a corresponding water path, and the inlet 15 can be selectively communicated with one of the transfer port 16, the supply port 17 and the shower supply port 17a.

A click stopping mechanism 19b is provided on the spool shaft 23 for easily setting a predetermined position of the spool shaft 23. The click stopping mechanism 19b comprises a spring 19d inserted into a hole 19c provided in a surface of the spool shaft 23 and two balls 19e and 19f urged by the spring 19d.

Supporting plates 18g are provided on the partition 18d, and the supporting plates 18g prevent the valve elements 18a₁, 18b₁ and 18c₁ from being moved laterally.

As shown in FIG. 5, each valve element (shown as valve element 18a₁ in FIG. 5) preferably comprises a core 18a₂ composed of, for example, a steel ball, and an elastic material layer 18a₃ covering the whole surface of the core 18a₂ and having a thickness of about 0.5 to 1 mm. With such a valve element, the sealing ability due to the valve element and the durability of the valve element and the valve seat therefor can be greatly improved. The valve element may be formed as a cone shape or a cylinder shape, and the elastic material layer 18a₁ may not be provided in a case where sufficiently good sealing ability and durability can be ensured without the elastic material layer.

As the material of the elastic material layer 18a₃, a rubber such as a nitrile rubber, an ethylene-propylene rubber, a fluoro rubber, a silicone rubber and a butyl rubber can be appropriately employed, and in particular, a rubber having a rubber hardness of 50 to 90 degrees can be adequately employed. The other valve elements 18b₁ and 18c₁ can be formed similarly.

The cartridge 12 containing a filter comprises a container 26 having an inflow port 24, for receiving untreated tap water, in a side wall thereof and a plurality of shower ports 25 (ports for supply of filtered water) in a bottom portion thereof. The container 26 contains a U-shaped hollow fiber bundle 28 formed from a plurality of hollow fibers the open ends of which are set so as to face the shower ports 25, and an adsorbent layer 29 charged between the outer surface of a cylindrical member 30, which is provided in the container 26, and the inner surface of the container 26. As the adsorbent of the adsorbent layer 29, an activated carbon, a zeolite, an ion exchange resin or a xylene resin is preferably used.

The hollow fiber bundle 28 is provided within the cylindrical member 20 both ends of which are open. The respective hollow fibers of the hollow fiber bundle 28 are bent into a U-shaped configuration and both ends of the respective hollow fibers are potted into a synthetic resin member 31 provided at a lower axial end region of the cylindrical member 30 so that both ends can open downwardly, the open ends of the respective hollow fibers thereby facing the shower supply ports 25.

The cylindrical member 30 is fixed at an upper axial end portion to the inner surface of the container 26 via a filter 32, and at a lower axial end portion thereof is fixed in the container 26 via a filter 33 provided with a plurality of holes. The lower axial end portion of the cylindrical member 30 sits in an upstanding short, cylindrical part projecting axially from the bottom portion of the container 26 and centrally of the container 26. An O-ring 34 sits within a recess in the side wall of the cylindrical member 30 at its lower axial end to provide a seal between the concentric surfaces of the cylindrical part 30 and the short cylindrical part in which it sits.

A transparent lid 35 is provided at an upper axial end of the container 26 so that the hollow fiber bundle 28 and the adsorbent layer 29 can be easily charged and the degree of soiling of the hollow fiber bundle 28 can be easily observed from outside. A removable opaque cover 36 is provided on the transparent lid 35 so that a double covering structure can be formed.

In the cartridge 12 thus constructed, a path of water to be filtered is provided, this extending from the inflow port 24 to the supply port 25 through the adsorbent layer 29 and the hollow fiber bundle 28. The cartridge 12 containing the filter is thus constructed integrally. The cartridge 12 is connected to the water purifier body 11 by a bayonet mechanism described below via a ring-like rubber packing 39, and the body 11 is connected to the faucet 13 to form the water purifier 10.

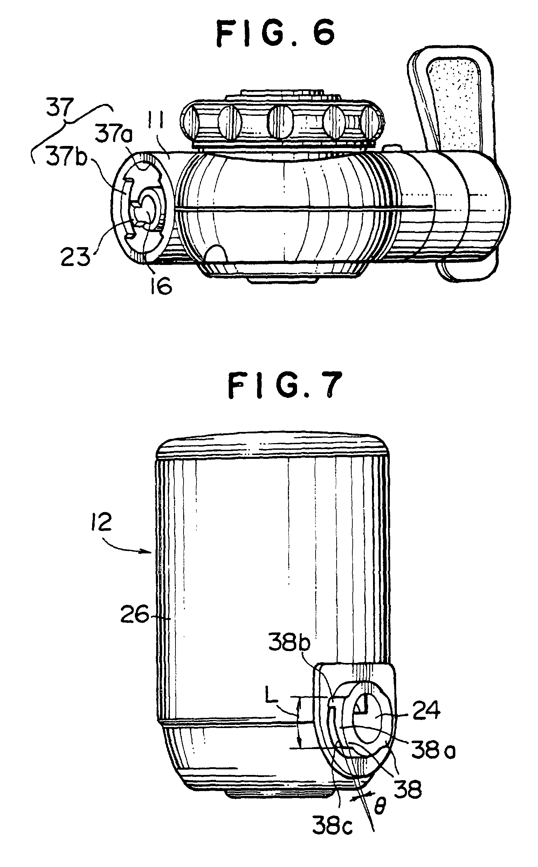

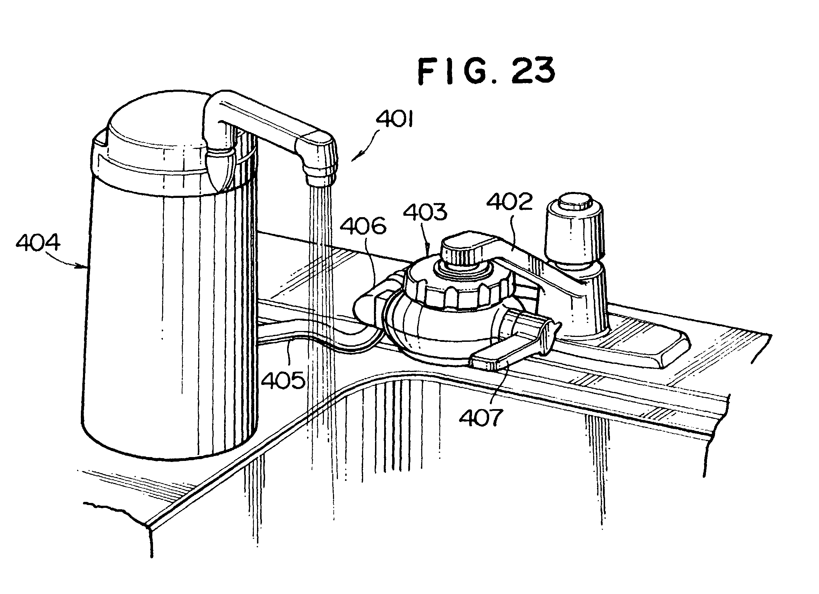

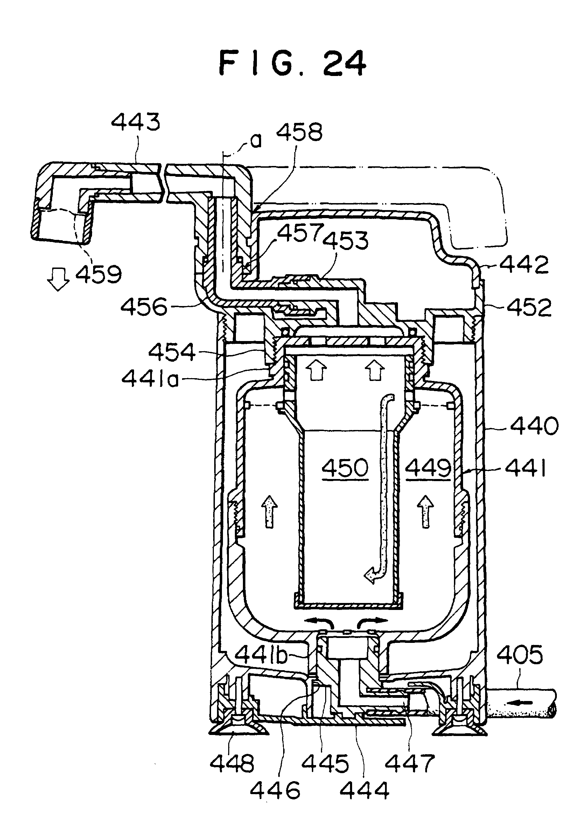

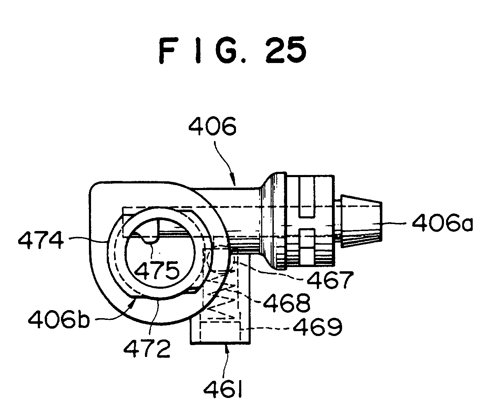

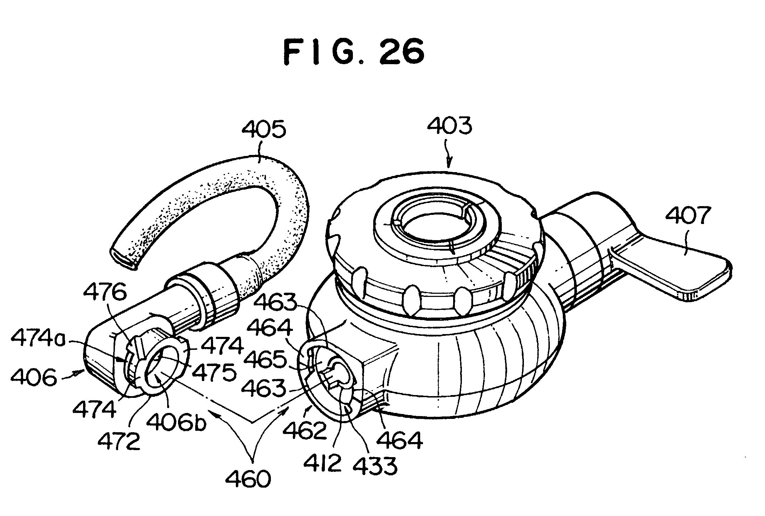

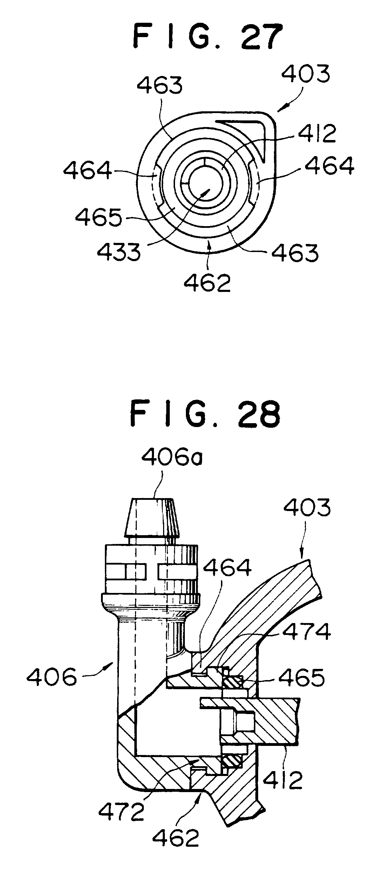

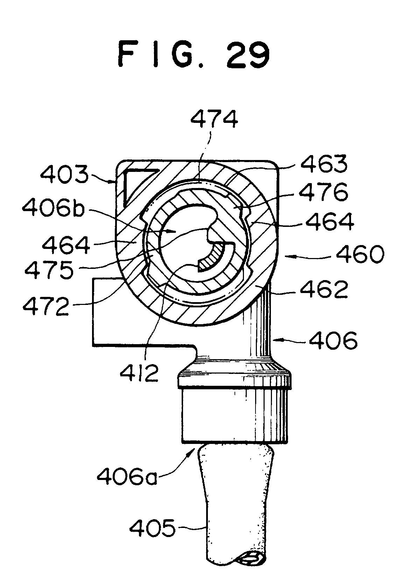

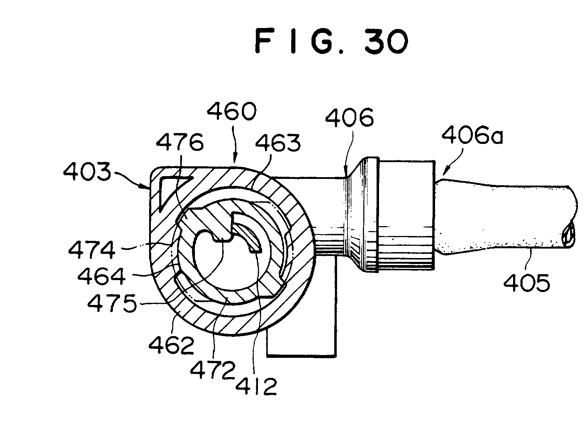

The bayonet mechanism, which affords detachable engagement of the cartridge 12 with the purifier body 11, is constructed as shown in FIGS. 6 and 7. The bayonet mechanism comprises a generally concave portion 37 defined by an end portion (shown in the drawing as a left hand end portion) of the spool shaft 23 in the water purifier body 11; which protrudes radially outwardly from the side wall of the body 18, and a generally convex portion 38 defined by an external periphery of the inflow port 24 of the cartridge 12, the respective concave and convex portions 37 and 38 being profiled so as to provide a mechanism for mutual attachment to and detachment from one another. The above detachable engagement occurs between the concave portion 37 on the spool shaft 23 and the convex portion 38 on the inflow port 24. Alternatively, the detachable engagement may occur between a concave portion defined by an appropriate protrusion from the cartridge side and a convex portion defined by an appropriate protrusion from the water purifier body side. In the embodiment shown in FIG. 7, the convex portion 38 is defined by the external periphery of the inflow port 24 which is profiled so as to provide a pair of part circumferential convex projections extending radially outwardly of the inflow port 24. Each convex projection has a tapered screw portion 38a having a predetermined length in the circumferential direction of the inflow port 24 in which the thickness in the axial direction varies around the circumference of the inflow port 24 to provide a taper angle of θ, and a stop 38b connected to the tapered screw portion 38a at its thickest circumferential end and extending in the axial direction of the inflow port 24. Although, in the embodiment, a pair of convex projections each having a tapered screw portion 38a is provided, two or more pairs of convex projections may be provided. It is advantageous to provide two or more pairs of such projections because it is then possible to decrease the rotational angle required for fixing the filter containing cartridge 12 to the water purifier body 11.

The concave portion 37 comprises notched portions 37a each having a circumferential length greater than the length L of the sum of the tapered screw portions 37b each engaging a corresponding tapered screw portion 38a and having a predetermined length. Both of the convex projections of the convex portions 38 are inserted into the respective notched portions 37a of the concave portion 37, the cartridge 12 is rotated after the insertion, and the tapered surfaces 38c of the tapered screw portion 38a are slid along the respective female screw portions 37b and engaged with the female screw portions 37b. When the end portions of the female screw portions 37b are brought into contact with the respectivestops 38b, the fastening operation is completed. In this embodiment, the stops 38b are disposed at positions such that the cartridge 12 stands up in a vertical direction as shown in FIG. 1 when the end portions of the female screw portions 37b are brought into contact with the respective stops 38b.

In the water purifier 10 of this embodiment thus constructed, the water purifier body 11 and the cartridge 12 containing the filter are connected such that they assume the respective states shown in FIGS. 6 and 7. In this condition, when the position of the switching lever 19a is observed from the right-hand side of FIG. 6, it is at the 12 o'clock position.

Firstly, when the switching lever 19a is rotated in a clockwise direction to be set at the 3 o'clock position, the tap water, supplied from the faucet 13 and flowing into the valve from the inlet 15, flows along the water path 18b, opened by pushing up the valve element 18b₁ by the operation of the cam 23b of the spool shaft 23, around the spool shaft 23, and out through the supply port 17, to provide a substantially linear flow of water.

When the switching lever 19a is rotated in a counterclockwise direction at an angle of 90 degrees to be returned to the 12 o'clock position, the valve element 18b₁ is moved down by being released from the cam 23b of the spool shaft 23 and the water path 18b is closed. Instead, the valve element 18c₁ is pushed up by the cam 23c of the spool shaft 23 and the water path 18c is opened. The tap water introduced from the inlet 15 flows along the water path 18c around the spool shaft 23, and the flow of the water supplied is switched to a shower flow, the water flowing out through the shower supply port 17a.

When the switching lever 19a is further rotated in the same counterclockwise direction at an angle of 90 degrees to be sent to the 9 o'clock position, the valve element 18a₁ is pushed up by the cam 23a of the spool shaft 23 and the water path 18a is opened. The water path is switched, and the tap water introduced from the inlet 15 is supplied. to the water transfer port 16 along the water path 18a. The tap water having reached the transfer port 16 is supplied to the inflow port 24 of the cartridge 12 containing the filter. At that time, because the cartridge 12 and the water purifier body 11 are securely connected to each other by the bayonet mechanism via the ring-like rubber packing 39, the water does not leak from this portion, and flows through this portion smoothly. The tap water supplied to the inflow port 24 passes from the filter 33 through the adsorbent layer 29 and the hollow fiber bundle 28 in this order, and the water is filtered in this portion and the filtered water flows out from the supply port 25 as a purified water.

Next, a top sink-type water purifier according to a further embodiment of the present invention will be explained with reference to FIGS. 23 to 30.

Although water purifiers having a cartridge type filter device have been explained in the above-described embodiment, in this further embodiment, a top sink-type water purifier is constructed.

FIG. 23 is a perspective view of a top sink-type water purifier according to this embodiment of the present invention. As shown in FIG. 23, a top sink-type water purifier 401 (hereinafter, also referred to as merely "a water purifier") comprises a valve body 403 connected directly to a faucet 402 for homes, a top sink-type filter device 404 for purifying tap water and a hose 405 for connecting the valve body 403 with the filter device 404 and introducing the tap water into the filter device 404. A joint 406 is interposed between the valve body 403 and the hose 405, and a switching lever 407 is attached to the valve body 403. This joint 406 is constructed using a bayonet mechanism described later.

The structure of the valve body 403 is similar to or substantially the same as that of the structure explained with reference to the first embodiment. Therefore, hereinafter, explanation will be confined mainly to the filter device 404 and the connection structure between the filter device 404 and the valve body 403.

FIG. 24 shows a vertical section of the filter device 404. As shown in FIG. 24, the filter device 404 comprises a cylindrical outer container 440 having a bottom, a filter unit 441, an upper cover 442 supporting the filter unit 441 and fitted into the outer container 440, and a nozzle 443 for purified water.

The upper end of the outer container 440 is opened and a bottom plate 444 formed as a disc-like shape is fixed to the lower end of the outer container 440. One end of an L-shaped inlet nozzle 445 is inserted into and connected to an opening 446 defined at a central position of the bottom of the outer container 440 under liquid hermetic sealing conditions. The inlet nozzle is rotatably supported by the bottom-plate 444. The hose 445 is connected to an inflow port 447 provided at the other end of the inlet nozzle 445 to provide fluid communication. An acetabulum 448 is disposed on the bottom surface of the bottom plate 444 so that the filter device 404 can be easily attached to or detached from a base such as a sink.

The filter unit 441 comprises an outer layer 449 comprising, for example, an adsorbent such as activated carbon and an activated coral sand, and an inner layer 450 charged with hollow fibers.

A filter supporting plate 452 is attached to the lower end of the upper cover 442, and this filter supporting plate 452 is screwed to the outer container so as to be attachable or detachable. The filter supporting plate 452 has in it an outflow conduit 453 including a central axial bore leading to an L-shaped joint extending in a radially outer direction from a central portion of the upper surface of the filter supporting plate 452, and a short internally threaded cylindrical projection 454 depending axially from a central portion of the lower surface of the filter supporting plate 452. A discharge port 441a on an upper axial end of the filter-unit 441 is defined by an externally screw threaded neck portion co-operable with the internally screw threaded projection 454 to allow attachment or detachment at will. An inflow port 441b at lower axial end of the filter unit 441 is connected to the outer surface of the inlet nozzle 445 in a manner allowing attachment or detachment so as to provide fluid communication.

One leg portion of an L-shaped connecting nozzle 456 extends outwardly and upwardly from a semi-circular depressed portion 458 having an opening 457 which is formed at an edge portion of the upper surface of the upper cover 442, and the other leg portion of the connecting nozzle 456 is connected to the outflow port 453 of the filter supporting plate 452 so as to allow fluid communication.

One end portion of an L-shaped nozzle 443 for purified water is connected to an outer axial end portion of the connecting nozzle 456 so as to allow fluid communication, and the nozzle 443 is supported rotatably around axis "a". The other end portion of the nozzle 443 is bent downwardly, and a spray nozzle 459 is provided at this end portion.

Next, the joint member will be explained with reference to FIG. 25. FIG. 25 is an elevational view of a joint.

As shown in FIG. 25, the joint 406 is formed as a generally L-shaped cylindrical pipe. The hose 405 is fitted onto a telescopic hose-receiving port 406a of the joint 406. An aperture extending radially through the cylindrical wall of a leg of the L-shaped pipe allows fluid communication between the joint 406 and a pressure relief valve 461 fitted thereon. The pressure relief valve 461 comprises a cylindrical tube extending radially outwardly from a leg of the joint 406 (the tube depending downwardly when the joint is fitted). The tube contains at its axial end adjacent the joint 406 and surrounding the aperture a ball 467 biased towards a position in which it closes the aperture by a spring 468 inserted into and extending axially within the tube. The ball 467 and spring 468 allow control of water pressure in the joint 406. An annular adjusting member 469 screwed into an axial end of the tube remote from the joint 406 enables adjustment of the force exerted by the spring on the ball so as to allow adjustment of the pressure to an appropriate valve. Namely, when the water pressure in the joint 406 increases, the ball 467 is pressed by the water pressure against the biasing force of the spring 468 and a water path through the aperture is provided. Therefore, the water pressure can be controlled at a constant pressure and inadvertent disconnection from the hose 405 can be prevented.

A connecting port 406b of the joint 406 to be positioned adjacent to the valve body side and remote from the hose-receiving part 406a forms one end of a bayonet mechanism constituting connecting means between a transfer port 433 of the valve body 403 and the connecting port 406b of the joint 406, which will now be explained with reference to FIGS. 26 and 27. FIG. 26 is a perspective view showing such a connecting means, generally indicated as 460. FIG. 26 shows the joint 406 removed from the valve body 403 and FIG. 27 is an elevational view showing the transfer port 433 of the valve body 403 for passage of tap water from the valve body 403. In these drawings, a switching lever 407 and a spool shaft 412 have substantially the same structure as those of the aforementioned first embodiment.

As shown in FIGS. 26 and 27, the transfer port 433 extending radially from a side wall of the valve body 403 is generally cylindrical and has a free axial end defining a generally concave portion 462. This concave portion 462 is profiled so as to form one end of the bayonet mechanism. In particular, the concave portion 462 has a pair of circumferentially spaced apart notched portions 463 and circumferentially between respective notched portions a pair of circumferentially spaced apart radially inwardly projecting protrusions 464 each extending in the circumferential direction around the internal peripheral surface of the free axial and the concave portion 462. A packing 465 is fitted into the transfer port 433 towards its axial end remote from that defining the concave portion 462.

As shown in FIGS. 25 and 26, the connecting portion 406b of the joint 406 for connection to the valve body is generally cylindrical and has a free axial end defining a generally convex portion 472 for insertion into the transfer port 433 provided with the concave portion 462. This convex portion 472 is thus profiled so as to form the other end of the bayonet mechanism. Namely, the outer diameter of the convex portion 472 is set slightly smaller than the inner diameter defined by the internal circumferential periphery of the pair of protrusions 464 of the concave portion 462. In particular, the convex portion 472 is profiled so as to provide a pair of circumferentially spaced apart convex-sided radially outwardly projecting protrusions 474 each extending in the circumferential direction around the external peripheral surface of the free axial end of the connecting portion 406b defining the convex portion 472. Each convex protrusion 474 is capable of being inserted into a respective notched portion 463 of the pair thereof formed around the internal circumferential surface of the concave portion 462. A projection 475 is also formed on the internal peripheral surface of the connecting port 406b. This projection 475 is engageable with a tip portion of the spool shaft 412 extending up to the transfer port 433 of the valve body 403.

FIG. 28 is a vertical sectional view of the connecting means 460 in a condition in which the concave portion 462 of the valve body 403 and the convex portion 472 of the joint 406 are engaged with each other.

As shown in FIG. 28, by inserting the convex portion 472 into the concave portion 462 and then rotating one or both portion relative to each other around their common axis, facing surfaces of the concave-sided protrusions 464 and the convex-sided protrusions 474 are brought into engagement with each other, and the valve body 403 and the joint 406 are connected to each other. By rotation of one or both of convex and concave portions relative to one another in the reverse direction, the concave-sided protrusions 464 and convex-sided protrusions 474 are disengaged from each other so as to allow detachment of the valve body 403 from the joint 406.

As shown in FIG. 26, the circumferential surface 474a of each convex-sided protrusion 474 engaging each concave-sided protrusion 464 is inclined along the circumferential direction, so that the relative movement of both portions in the rotational direction is thus rendered smooth and the extent of engagement of both portions can be improved. A stop 476 is provided at a circumferential end position of each convex-sided protrusion 474 for regulating the relative rotational movement of both portions 474 and 462 around the axis. When the end portion of the concave-sided protrusion 464 comes into contact with this stop 476 of the convex-sided protrusion 474, both protrusions 464 and 474 can engage with each other appropriately, and the internal circumferential surface of the convex portion 472 presses the packing 465 (FIG. 28) so that the convex portion 472 and the concave portion 462 are engaged in a liquid hermetic sealing condition.

FIGS. 29 and 30 are vertical sectional views of the connecting means 460 for explaining the connecting operation.

In a case where the joint 406 connected to the hose 405 is connected to the valve body 403 fixed in a vertically standing condition, in the first step, as shown in FIG. 29, the hose-receiving port 406a of the joint 406 is set in a vertically standing condition so that it is directed downwardly. In this condition, the convex-sided protrusions 474 of the convex portion 472 are inserted into the notched portions 463 of the concave portion 462. In the second step, as shown in FIG. 30, the joint 406 is rotated in a counterclockwise direction through an angle of about 90 degrees as viewed from the side of the valve body 403. By this operation, the concave-sided protrusions 464 assume a position axially between an axial end of the connecting port 406b remote from the free axial end and the convex-sided protrusions 474 (FIGS. 26 and 28) of the convex portion 472 at the free axial end of the connecting part 406b. As the joint 406 is rotated, so the respective concave-sided protrusions 464 gradually engage the slopes 474a of the respective convex-sided protrusions 474, and when the circumferential end portions of the concave-sided protrusions 464 come into contact with the respective stops 476, the valve body 403 and the joint 406 are connected in a liquid hermetic sealing condition. At that time, the joint 406 is set in a horizontal condition (FIG. 30).

Thus, in the water purifier 401 according to this embodiment, the joint 406 connected to the hose 405 can be connected to the valve body 403 substantially merely by the second step. Therefore, as compared with the conventional screw-type joint, the joint 406 can be connected to the valve body 403 easily and appropriately. Furthermore, when the joint 406 is connected by setting the hose-receiving port 406a of the joint 406 in a vertically standing condition so that it is directed upwardly (contrary to the above-described condition), connection can be made inserting the convex portion 472 into the concave portion 462 and rotating it by an angle of about 90 degrees. Since the hose-receiving port 406a is set in a horizontal direction (contrary to the above-described direction), the setting position and direction thereof can be appropriate changed so that the connected hose 405 is not obstructed.

A situation may arise where the joint 406 is detached from the valve body 403 in a condition where the cam of the spool shaft 412 opens the water path communicating the filter device 404, that is, the switching lever 407 is set at a position for water purification (refer to the first embodiment). In such a case, during detachment, the projection 475 provided on the inner surface of the convex portion 472 engages the tip portion of the spool shaft 412 extending through the transfer port 433. Thus, during the relative rotation of the conves portion 472 and the concave portion 462 around the axis, simultaneously the projection 475 rotates the spool shaft 412 such that the above-described water path is closed (FIG. 26). By this operation, even when the joint 406 is detached from the valve body 403, tap water does not escape from the transfer port 433.

In the top sink-type water purifier according to this embodiment, since a multi-way valve similar to that of the first embodiment is employed, the degree of movement of a selected valve element necessary for opening and closing a selected water path can be decreased as compared with conventional multi-way valve, the multi-way valve can be constructed so as to be small in size as a whole and the amount of resident fluid in the valve can be reduced. Moreover, when the valve elements are taken off or exchanged, because only the upper portion of the valve casing need be opened, the operation therefore can be facilitated as compared with the operation of conventional valves wherein almost the whole of the valve must be disassembled.

Furthermore, because the transfer port of the valve body and the joint connected to the hose are connected to each other by the above-described bayonet mechanism, the valve body and the joint (the hose) can be attached to and detached from each other very easily and adequately. Moreover, because the attaching condition and the direction of the joint including the hose can be appropriately changed, the hose can be appropriately set in a direction desired for attachment or detachment so that the hose is not obstructed.

Furthermore, in the bayonet mechanism, by inclining at least one side surface of the convex-sided protrusions and the concave-sided protrusions along the circumferential direction, the convex portion and the concave portion can rotate smoothly relative to one another around the axis and yet both protrusions can engage with each other to provide good contact when both portions are connected to each other. During the connecting operation, the stop formed on the end portion of at least one of the convex-sided protrusions and the concave-sided protrusions can appropriately regulate the relative positions of the convex portion and the concave portion in their rotational direction around the axis, and the valve body and the joint with the hose can be connected so as to assume an appropriate direction as well as ensuring the prevention of water leakage at the connecting portion.

## Claims

1. A multi-way valve comprising:
a valve casing (18) having a valve inlet (15) for entry of fluid into the valve and a plurality of valve outlets (16, 17, 17a) for supply of fluid from the valve;
a first chamber (18e) and a second chamber (18f) each within the valve casing, the first chamber (18e) communicating with the valve inlet (15) and the second chamber (18f) communicating with the valve outlets (16, 17, 17a), respectively;
a partition (18d) disposed between the first and second chambers (18e, 18f) and separating the first and second chambers from one another, the partition (18d) having a plurality of apertures (18a, 18b, 18c) therein allowing communication between the first and second chambers (18e, 18f) and providing respective fluid inlets to respective fluid paths, within the second chamber (18f), communicating one with each respective valve outlet (16, 17, 17a) of the said plurality thereof;
a plurality of valve elements (18a₁, 18b₁, 18c₁) each associated with a corresponding said aperture (18a, 18b, 18c) and movable between a first position in which the corresponding said aperture is closed thereby and a second position in which the corresponding said aperture is in an open condition;
valve operating means comprising a plurality of cams (23a, 23b, 23c) each associated with a corresponding said valve element (18a₁, 18b₁, 18c₁) and cooperable with the said valve element (18a₁, 18b₁, 18c₁) so as to allow selective movement of each valve element (18a₁, 18b₁, 18c₁) between the said first and second positions;
the said plurality of valve elements (18a₁, 18b₁, 18c₁) being disposed generally in one of the first and second chambers (18e, 18f) and the said valve operating means being disposed generally in the other of the first and second chambers (18e, 18f) so that the said partition (18d) is disposed generally between the said plurality of valve elements (18a₁, 18b₁, 18c₁) and valve operating means;
each said aperture (18a, 18b, 18c) in the partition (18d) allowing the said cooperation between the valve element (18a₁, 18b₁, 18c₁) corresponding with the aperture (18a, 18b or 18c) and the cam (23a, 23b or 23c) corresponding with the valve element so as selectively to open or close each said aperture and therefore select which said fluid path is to be open and which is to be closed.

2. A multi-way valve according to claim 1, wherein the said plurality of valve elements (18a₁, 18b₁, 18c₁) is disposed generally in the first chamber (18e) and the valve operating means is disposed generally in the second chamber (18f).

3. A multi-way valve according to claim 2, wherein the weight of each valve element (18a₁, 18b₁, 18c₁) and fluid pressure is capable of biasing each valve element (18a₁, 18b₁, 18c₁) towards the first position and the valve operating means is operable to effect cooperation between a selected said cam (23a, 23b, 23c) and the valve element corresponding therewith to urge the valve element (18a₁, 18b₁, 18c₁) away from the said first position against the said bias.

4. A multi-way valve according to any preceding claim, wherein the valve elements (18a₁, 18b₁, 18c₁) are spherical elements.

5. A multi-way valve according to claim 4, wherein each of the valve elements comprises a core composed of a rigid material and an elastic material provided on the surface of the core.

6. A multi-way valve according to any preceding claim, the valve elements (18a₁, 18b₁, 18c₁) and respective apertures (18a, 18b, 18c) associated therewith are spaced apart from one another in a longitudinal direction and the valve operating means, additionally comprises a rotatable body (23) from which the cams (23a, 23b, 23c) project radially, the cams (23a, 23b, 23c) being spaced apart from one another along an axial direction of the rotatable body (23) parallel to the said longitudinal direction so as to lie in register with selected spaced apart apertures (18a, 18b, 18c).

7. A multi-way valve according to claim 6, wherein at least a first said cam (23a) is displaced circumferentially of the rotatable body (23) relative to at least a second said cam (23b), so that on rotation of the rotatable body (23a) to a first position at least the first cam (23a) assumes a position of cooperation with the valve element (18a₁) corresponding therewith and at least the second cam (23b) assumes a position free from cooperation with the valve element (23b) corresponding therewith, while on rotation of the rotatable body to a second position at least the first cam (23a) assumes a position free from cooperation with the valve element corresponding therewith and at least the second cam (23b) assumes a position of cooperation with the valve element (23b) corresponding therewith, whereby selection of the position of rotation of the rotatable body (23) allows the said selection of which said fluid path is to be open and which is to be closed.

8. A multi-way valve according to claim 6 or claim 7, wherein the respective fluid paths are formed between the respective said fluid inlets, provided by the respective said apertures (18a, 18b, 18c), paths and the respective said valve outlets (16, 17, 17a) and the respective fluid paths are separated from each other by sealing means (23d, 23e) carried by the rotatable body (23).

9. A water purifier (10) having a multi-way valve for switching untreated water flowing into at least one of a plurality of outflow destinations and means for filtering untreated water received from the multi-way valve, which said multi-way valve is a valve according to any preceding claim.

10. A water purifier according to claim 9, wherein the filtering means comprises an exchangeable cartridge-type filter device (12).

11. A water purifier according to claim 9, wherein the filtering means comprises a top sink-type filter device (404) .

## Patentansprüche

1. Mehrwegventil, umfassend:
ein Ventilgehäuse (18) mit einem Ventileinlass (15) zum Eintritt eines Fluids in das Ventil and mehreren Ventilauslässen (16, 17, 17a) zur Bereitstellung von Fluid aus dem Ventil;
eine erste Kammer (18e) and eine zweite Kammer (18f), die sich jeweils im Ventilgehäuse befinden, wobei die erste Kammer (18e) mit dem Ventileinlass (15) in Kommunikation steht and die zweite Kammer (18f) mit den Ventilauslässen (16, 17, 17a) in Kommunikation steht;
eine Trennwand (18d), die zwischen der ersten and der zweiten Kammer (18e, 18f) angeordnet ist and die erste and die zweite Kammer voneinander trennt, wobei die Trennwand (18d) mehrere Öffnungen (18a, 18b, 18c) darin aufweist, die Kommunikation zwischen der ersten and der zweiten Kammer (18e, 18f) ermöglichen and jeweilige Fluideinlässe für jeweilige Fluidwege innerhalb der zweiten Kammer (18f) bereitstellen, wobei jeweils eine mit einem entsprechenden der mehreren Ventilauslässe (16, 17, 17a) kommuniziert;
mehrere Ventilelemente (18a₁ 18b₁ 18c₁), die jeweils mit einer entsprechenden der Öffnungen (18a, 18b, 18c) verbunden sind und zwischen einer ersten Position, in der die entsprechende Öffnung dadurch verschlossen ist, und einer zweiten Position, in der die entsprechende Öffnung geöffnet ist, bewegbar sind;
Ventilstellmittel, umfassend mehrere Nocken (23a, 23b, 23c), die jeweils mit einem entsprechenden der Ventilelemente (18a₁, 18b₁, 18c₁) verbunden sind und mit dem Ventilelement (18a₁, 18b₁, 18c₁) zusammenwirken können, um eine selektive Bewegung jedes Ventilelements (18a₁, 18b₁, 18c₁) zwischen der ersten und der zweiten Position zu ermöglichen;
wobei die mehreren Ventilelemente (18a₁, 18b₁, 18c₁) im Allgemeinen in einer von erster und zweiter Kammer (18e, 18f) angeordnet ist and das Ventilstellmittel im Allgemeinen in der anderen von erster and zweiter Kammer (18e, 18f) angeordnet ist, só dass die Trennwand (18d) im Allgemeinen zwischen den mehreren Ventilelementen (18a₁, 18b₁, 18c₁) and dem Ventilstellmittel angeordnet ist;
wobei jede der Öffnungen (18a, 18b, 18c) in der Trennwand (18d) das Zusammenwirken zwischen dem Ventilelement (18a₁, 18b₁, 18c₁), das der Öffnung (18a, 18b, 18c) entspricht, and der Nocke (23a, 23b oder 23c), die dem Ventilelement entspricht, ermöglicht, um jede Öffnung selektiv zu öffnen oder zu schließen and somit zu bestimmen, welcher der genannten Fluidwege geöffnet and welcher geschlossen sein soll.

2. Mehrwegventil nach Anspruch 1, worin die mehreren Ventilelemente (18a₁, 18b₁, 18c₁) im Allgemeinen in der ersten Kammer (18e) angeordnet sind and das Ventilstellmittel im Allgemeinen in der zweiten Kammer (18f) angeordnet ist.

3. Mehrwegventil nach Anspruch 2, worin das Gewicht jedes Ventilelements (18a₁, 18b₁, 18c₁) and der Fluiddruck jedes Ventilelement (18a₁, 18b₁, 18c₁) zur ersten Position hin vorspannen können and das Ventilstellmittel so bedienbar ist, dass es ein Zusammenwirken zwischen einer bestimmten Nocke (23a, 23b, 23c) and dem Ventilelement, das dieser entspricht, bewirkt, wodurch das Ventilelement (18a₁, 18b₁, 18c₁) aus der ersten Position gegen die Vorspannung gedrückt wird.

4. Mehrwegventil nach einem der vorangegangenen Ansprüche, worin die Ventilelemente (18a₁, 18b₁, 18c₁) kugelförmige Elemente sind.

5. Mehrwegventil nach Anspruch 4, worin jedes der Ventilelemente einen Kern aus hartem Material and ein auf der Oberfläche des Kerns vorgesehenes elastisches Material umfasst.

6. Mehrwegventil nach einem der vorangegangenen Ansprüche, worin die Ventilelemente (18a₁, 18b₁, 18c₁) und die jeweiligen, damit verbundenen Öffnungen (18a, 18b, 18c) in Längsrichtung voneinander beabstandet sind and das Ventilstellmittel außerdem einen rotierbaren Körper (23) umfasst, aus dem die Nocken (23a, 23b, 23c) radial vorstehen, wobei die Nocken (23a, 23b, 23c) in einer Axialrichtung des rotierbaren Körpers (23), die parallel zur genannten Längsrichtung verläuft, voneinander beabstandet sind, so dass sie mit bestimmten voneinander beabstandeten Öffnungen (18a, 18b, 18c) ausgerichtet sind.

7. Mehrwegventil nach Anspruch 6, worin zumindest eine erste der Nocken (23a) relativ zu zumindest einer zweiten der Nocken (23b) in Umfangsrichtung des rotierbaren Körpers (23) so versetzt ist, dass bei Rotation des rotierbaren Körpers (23a) in eine erste Position zumindest die erste Nocke (23a) eine Position einnimmt, in der sie mit dem ihr entsprechenden Ventilelement (18a₁) zusammenwirkt, and worin zumindest die zweite Nocke (23b) eine Position einnimmt, in der sie nicht mit dem ihr entsprechenden Ventilelement (23b) zusammenwirkt, während bei Rotation des rotierbaren Körpers in eine zweite Position zumindest die erste Nocke (23a) eine Position einnimmt, in der sie nicht mit dem ihr entsprechenden Ventilelement zusammenwirkt and zumindest die zweite Nocke (23b) eine Position einnimmt, in der sie mit dem ihr entsprechenden Ventilelement (23b) zusammenwirkt, womit durch die Wahl der Rotationsposition des rotierbaren Körpers (23) bestimmt werden kann, welcher der genannten Fluidwege geöffnet und welcher geschlossen sein soll.

8. Mehrwegventil nach Anspruch 6 oder Anspruch 7, worin die jeweiligen Fluidwege zwischen den jeweiligen Fluideinlässen ausgebildet sind and durch die jeweiligen Öffnungen (18a, 18b, 18c), Wege and die jeweiligen Ventilauslässe (16, 17, 18) bereitgestellt sind and worin die jeweiligen Fluidwege mithilfe von Dichtungsmitteln (23d, 23e), die vom rotierbaren Körper (23) getragen werden, voneinander getrennt sind.

9. Wasserreiniger (10) umfassend ein Mehrwegventil zum Umleiten von unbehandeltem Wasser, das in zumindest eine von mehreren Ausflussstellen fließt, and Mittel zum Filtern von unbehandeltem Wasser, das vomMehrwegventil aufgenommen wird, wobei das Mehrwegventil eine Ventil nach einem der vorangegangenen Ansprüche ist.

10. Wasserreiniger nach Anspruch 9, worin das Filtermittel eine austauschbare Filtervorrichtung vom Patronentyp (12) umfasst.

11. Wasserreiniger nach Anspruch 9, worin das Filtermittel eine Filtervorrichtung vom Senkentyp (404) umfasst.

## Revendications

1. Distributeur à plusieurs voies comprenant :
un boîtier de vanne (18) présentant une entrée de vanne (15) pour l'entrée d'un fluide dans la vanne et plusieurs sorties de vanne (16, 17, 17a) pour l'amenée du fluide de la vanne ;
une première chambre (18e) et une seconde chambre (18f) chacune dans le boîtier de vanne, la première chambre (18e) communiquant avec l'entrée de vanne (15) et la seconde chambre (18f) communiquant avec les sorties de vanne (16, 17, 17a), respectivement ;
une séparation (18d) disposée entre les première et seconde chambres (18e, 18f), et séparant les première et seconde chambres l'une de l'autre, la séparation (18d) présentant plusieurs ouvertures (18a, 18b, 18c) à l'intérieur permettant la communication entre les première et seconde chambres (18e, 18f) et réalisant des entrées de fluide respectives à des chemins de fluide respectifs, dans la seconde chambre (18f), dont chacune communique avec chaque sortie de vanne respective (16, 17, 17a) de ladite pluralité de celles-ci ;
plusieurs éléments de vanne (18a₁, 18b₁, 18c₁) chacun associé à l'une desdites ouvertures correspondantes (18a, 18b, 18c) et déplaçable entre une première position où ladite ouverture correspondante est fermée par celui-ci et une seconde position où ladite ouverture correspondante est à l'état ouvert ;
un moyen d'actionnement de vanne comprenant plusieurs cames (23a, 23b, 23c) chacune associée à un élément de vanne correspondant précité (18a₁, 18b₁, 18c₁) et apte à coopérer avec ledit élément de vanne (18a₁, 18b₁, 18c₁) de manière à permettre un mouvement sélectif de chaque élément de vanne (18a₁, 18b₁, 18c₁) entre lesdites première et seconde positions ;
ladite pluralité d'éléments de vanne (18a₁, 18b₁. 18c₁) étant disposée généralement dans l'une des première et seconde chambres (18e, 18f), et ledit moyen d'actionnement de vanne étant disposé généralement dans l'autre des première et seconde chambres (18e, 18f) de telle sorte que ladite séparation (18d) est disposée généralement entre ladite pluralité d'éléments de vanne (18a₁, 18b₁, 18c₁) et le moyen d'actionnement de vanne ;
chaque ouverture précitée (18a, 18b, 18c) dans la séparation (18d) permettant ladite coopération entre l'élément de vanne (18a₁, 18b₁, 18c₁) correspondant à l'ouverture (18a, 18b ou 18c) et la came (23a, 23b ou 23c) correspondant à l'élément de vanne de manière à ouvrir ou fermer sélectivement chaque ouverture précitée et à sélectionner ainsi le chemin de fluide précité qui doit être ouvert et qui doit être fermé.

2. Distributeur à plusieurs voies selon la revendication 1, où plusieurs éléments de vanne précités (18a₁, 18b₁, 18c₁) sont disposés généralement dans la première chambre (18e), et le moyen d'actionnement de vanne est disposé généralement dans la seconde chambre (18f).

3. Vanne à plusieurs voies selon la revendication 2, où le poids de chaque élément de vanne (18a₁, 18b₁, 18c₁) et la pression du fluide sont aptes à solliciter chaque élément de vanne (18a₁, 18b₁, 18c₁) vers la première position, et le moyen d'actionnement de vanne est actionnable pour réaliser une coopération entre une came sélectionnée (23a, 23b, 23c) et l'élément de vanne correspondant à celle-ci pour solliciter l'élément de vanne (18a₁, 18b₁, 18c₁) au loin de ladite première position contre ladite sollicitation.

4. Distributeur à plusieurs voies selon l'une des revendications précédentes, où les éléments de vanne (18a₁, 18b₁, 18c₁) sont des éléments sphériques.

5. Distributeur à plusieurs voies selon la revendication 4, où chacun des éléments de vanne comprend un noyau réalisé en un matériau rigide et un matériau élastique prévu sur la surface du noyau.

6. Distributeur à plusieurs voies selon l'une des revendications précédentes, où les éléments de vanne (18a₁, 18b₁, 18c₁) et des ouvertures respectives (18a, 18b, 18c) associées à ceux-ci sont espacés les uns des autres dans une direction longitudinale, et le moyen d'actionnement de vanne comprend additionnellement un corps tournant (23) à partir duquel les cames (23a, 23b, 23c) font saillie radialement, les cames (23a, 23b, 23c) étant espacées les unes des autres le long d'une direction axiale du corps tournant (23) parallèlement à ladite direction longitudinale de manière à coïncider avec les ouvertures espacées sélectionnées (18a, 18b, 18c).

7. Distributeur à plusieurs voies selon la revendication 6, où au moins une première came précitée (23a) est déplacée circonférentiellement du corps rotatif (23) relativement à au moins une deuxième came précitée (23b) de telle sorte que lors de la rotation du corps tournant (23a) à une première position, au moins la première came (23a) occupe une position de coopération avec l'élément de vanne (18a₁,) correspondant à celle-ci, et au moins la seconde came (23b) occupe une position exempte dune coopération avec l'élément de vanne (23b) correspondant à celle-ci, alors que lors de la rotation du corps tournant à une deuxième position, au moins la première came (23a) occupe une position exempte d'une coopération avec un élément de vanne correspondant à celle-ci, et au moins la deuxième came (23b) occupe une position de coopération avec l'élément de vanne (23b) correspondant à celle-ci, par quoi la sélection de la position de rotation du corps tournant (23) permet ladite sélection pour déterminer quel est le chemin de fluide qui doit être ouvert et celui qui doit être fermé.

8. Distributeur à plusieurs selon la revendication 6 ou la revendication 7, où les chemins de fluide respectifs sont formés entre lesdites entrées de fluide respectives, réalisées par lesdites ouvertures respectives (18a, 18b, 18c), les chemins et les sorties de vanne respectives précités (16, 17, 17a), et les chemins de fluide respectifs sont séparés les uns des autres par des moyens d'étanchéité (23d, 23e) portés par le corps tournant (23).

9. Purificateur d'eau (10) comportant un distributeur à plusieurs voies pour commuter l'eau non traitée s'écoulant dans au moins l'une de plusieurs destinations d'écoulement et un moyen pour filtrer l'eau non traitée reçue du distributeur à plusieurs voies, où ledit distributeur à plusieurs voies est une vanne selon l'une des revendications précédentes.

10. Purificateur d'eau selon la revendication 9, où le moyen de filtrage comprend un dispositif de filtration (12) du type à cartouche échangeable.

11. Purificateur d'eau selon la revendication 9, où le moyen de filtrage comprend un dispositif de filtration du type installé au-dessus d'un bassin d'évier.
